# EUROPÄISCHE PATENTSCHRIFT

(11) **EP 2 964 540 B1**
(45) Veröffentlichungstag und Bekanntmachung des Hinweises auf die Patenterteilung: **25.01.2017**
(21) Anmeldenummer: 14708202.8
(22) Anmeldetag: 05.03.2014
(51) Int. Cl.: B65D 77/06

(54) **PALETTENCONTAINER UND VERFAHREN ZUR EINFALTUNG EINES INLINERS**
PALLET CONTAINER AND METHOD OF FOLDING AN INLINER
CONTENEUR SUR PALETTE ET MÉTHODE DE PLIAGE D'UNE POCHE INTÉRIEURE

(30) Priorität: 05.03.2013 DE 202013002053 U; 12.08.2013 DE 202013007403 U; 27.09.2013 US 201361883582 P
(43) Veröffentlichungstag der Anmeldung: 13.01.2016
(73) Patentinhaber: Mauser-Werke GmbH, 50321 Brühl (DE); IBA Intermediate Bulk Alliance GmbH, 49453 Rehden (DE)
(72) Erfinder: SIEBEL, Sascha, 49356 Diepholz (DE)
(86) Internationale Anmeldenummer: PCT/EP2014/000561
(87) Internationale Veröffentlichungsnummer: WO 2014/135277

(56) Entgegenhaltungen:
- EP-A1- 0 573 230
- EP-A1- 1 103 486
- EP-B1- 2 149 508
- WO-A1-97/34794
- WO-A1-02/074141
- WO-A1-2007/029011
- WO-A2-93/24389
- JP-A- 2004 182 275
- JP-A- 2005 289 464
- US-A- 3 143 249
- US-A- 4 138 036
- US-A1- 2005 040 063
- US-A1- 2005 145 521
- US-A1- 2006 175 385
- US-A1- 2008 067 176

## Beschreibung

Die vorliegende Erfindung betrifft einen Palettencontainer zur Lagerung und zum Transport von aseptischen flüssigen Füllgütern, mit einer Bodenpalette, einem darauf befestigten Gitterrahmen aus verschweißten Metallstäben und einem darin einzuhängenden Gewebesack bzw. einer Gewebehülle, in der ein flüssigkeitsdichter Inliner aus Kunststoff- und/oder Metallfolie zur Aufnahme des flüssigen Füllguts angeordnet ist.

Ein derartiger Palettencontainer ist z. B. aus der EP 2 149 508 B1 vorbekannt. Bei diesem Palettencontainer ist der innere flüssigkeitsaufnehmende Inliner austauschbar ausgebildet, wozu die äußere Gewebehülle oben mit einer großen verschließbaren Klappenöffnung versehen ist. Zum Austausch des Inliners nach einmaligem Gebrauch muss der gesamte gebrauchte Palettencontainer leer zu einer zentralen Aufarbeitungsstelle zurücktransportiert werden, um dort mit einem neuen Inliner versehen zu werden. Zum Einbau eines neuen Inliners muss die obere Klappe der Gewebehülle geöffnet werden. Durch die Öffnung muss der neue Inliner eingebracht und befestigt werden. Der Einbau ist kompliziert und arbeitsaufwendig; er kann nur von einer entsprechend geschulten Fachkraft ausgeführt werden. Das ist kostenintensiv und umständlich, da die innenseitigen Inliner in nachteiliger Weise nicht bei jedem beliebigen Rekonditionierer aufgearbeitet werden können. Ein weiterer Nachteil des bekannten Palettencontainers ist, dass der Inliner bei Befüllung unter Druck Falten wirft, die später die Entleerung verzögern können, insbesondere indem sie die Öffnung des Entnahmestutzens versperren können.

Bei weiteren bekannten Palettenbehältern (EP 1 103 486 A1, WO 2007/029011 A1) ist der Inliner an der äußeren Hülle befestigt, so dass Inliner und äußere Hülle nur in den Gitterkäfig gespannt werden können, wenn Luft in den Inliner gelangt. Diese Behälter sind daher für die Befüllung mit aseptischen Füllgütern ungeeignet. Darüber hinaus müssen wegen der Befestigung der Inliner an den Außenhüllen nach Gebrauch beide Hüllen entsorgt werden, nicht nur der mit dem Füllgut in Berührung gekommene Inliner.

Aus JP 2005 289464 A ist weiter ein besonders gefalteter austauschbarer Inliner für einen Flüssigkeitsbehälter bekannt. Der Inliner soll eine aufwändige Reinigung des Behälterinneren nach erfolgter Füllgutentnahme ersparen. Der Unterboden des Flüssigkeitsbehälters ist trichterförmig (nach Art einer auf dem Kopf stehenden Pyramide) nach unten ausgeformt und mit einer zentralmittigen Entnahmeöffnung und angeschlossener Entnahmearmatur versehen. Der Inliner weist eine quadratförmige Oberseite mit zentralmittigem Befüllstutzen und eine quadratförmige Unterseite mit zentralmittigem Entleerungsstutzen auf, wobei die Ecken des quadratischen Zuschnitts abgeschnitten sind. Die aufeinanderliegenden Außensaumkanten sind umlaufend miteinander verschweißt, wobei der obere Befüllstutzen und der untere Entleerungsstutzen zentralmittig übereinanderliegend angeordnet sind.

Dieser flach ausgelegte symmetrische Zuschnitt wird viermal von zwei jeweils gegenüberliegenden Ecken zur Mitte hin und dreimal um jeweils ein Drittel von der Seite her eingefaltet, so dass sich ein quadratisches Faltpaket im Kleinstformat ergibt, das für Austauschzwecke leicht verschickt werden kann. Zum Einsetzen in den Flüssigkeitsbehälter muss dieser auseinandergeschraubt und der unten freie Entleerungsstutzen des Inliner-Faltpakets an die zentralmittige Entnahmearmatur im trichterförmigen Behälterboden sowie der obere Einfüllstutzen an ein Füllrohr angeschlossen werden. Die Befüllung erfolgt von oben. Bei dieser symmetrischen Konstruktion mit zentralmittiger Befüllung von oben soll sich der kleingepackte Inliner von selbst entfalten.

Diese bekannte Art der Faltung und Entfaltung mag bei einem Inliner mit einem oberseitig mittig angeordneten Befüllstutzen wie dort vorgesehen funktionieren, nicht jedoch bei einer Anordnung des Inliners innerhalb eines gattungsgemäßen Palettencontainers bei seitlicher Befüllung von unten, weil dort andere konstruktive und funktionelle Bedingungen herrschen. Der Druck des seitlich einströmenden Füllguts verursacht eine Zugkraft auf den Inlinerboden, die bewirken würde, dass die Ecken des Inlinerbodens unter Faltenbildung zur Mitte hingezogen würden, wenn der Inlinerboden nicht auf der dünnen Bodenplatte aufgespannt und fixiert wäre.

Aus WO93/24389 A2 ist schließlich ein Inliner für einen blockförmigen Behälter bekannt, der besonders gefaltet und an zwei Punkten des starren äußeren Behälters so fixiert ist, dass sich der Inliner bei Befüllung von selbst ohne Faltenbildung entfalten soll.

Bei diesem bekannten System wird der Inliner von den Seiten her eingefaltet/eingerollt, die Einfüllöffnung des schlauchförmig eingerollten Inliners an der oberen Kante der Behälterwand fixiert und die Entleerungsöffnung an der unteren Kante der Behälterwand. Der schlauchförmig zusammengefaltete/-gerollte Inliner wird zwischen den Befestigungspunkten mittig über die gesamte Länge einer Seitenwand positioniert. Bei Befüllung soll sich der Inliner sowohl symmetrisch in Querrichtung als auch in Längsrichtung des Behälters selbständig entfalten können.

Die aus diesem System bekannte schlauchförmige Faltung des Inliners von den Seiten her kann zusammen mit der dort vorgesehenen Fixierung des Inliners an der oberen Kante und an der unteren Seitenwand des Außenbehälters funktionieren, da sich bei Befüllung nur noch die eingefalteten oder -gerollten Seiten entfalten müssen. Bei einer Anordnung des Inliners innerhalb eines gattungsgemäßen handelsüblichen Palettencontainers ist jedoch eine Aufspannung des Inliners durch zweifache Befestigung desselben an der äußeren Hülle nicht ohne weiteres möglich, da bei dem gattungsgemäßen Palettencontainer die Kombination von Außenhülle und Inliner den üblichen starren Kunststoffinnenbehälter ersetzt, so dass das Gesamtgebinde über keine durchgehende starre obere Behälterwand verfügt, an der der Einfüllstutzen so passend positioniert fixiert werden kann, dass eine automatische gleichmäßige Entfaltung bei Befüllung sichergestellt ist. Im Gegensatz zu dem bekannten System muss bei einer Anordnung des Inliners innerhalb des gattungsgemäßen Palettencontainers und Befüllung von unten seitlich eine möglichst faltenfreie Entfaltung des Inliners in alle Richtungen hin gewährleistet werden.

Es ist Aufgabe der vorliegenden Erfindung, eine handhabbare und praktikable Lösung vorzuschlagen, die ein einfaches und kostengünstiges Auswechseln der gebrauchten Inliner ermöglicht und weiterhin lange Transportwege vermeidet, da die Auswechselung der Inliner bei jedem Rekonditionierer vor Ort durchgeführt werden kann. Eine weitere Aufgabe der Erfindung ist darauf ausgerichtet, die Komponenten des Palettencontainers so auszugestalten, dass der Inliner bei Befüllung auch unter Druck keine Falten wirft, die die Entleerung verzögern können, insbesondere indem sie die Öffnung des Entnahmestutzens versperren könnten.

Diese Aufgabe wird gemäß den kennzeichnenden Merkmalen der Ansprüche 1 und 13 gelöst. Die äußere Gewebehülle und der innenseitige flüssigkeitsdichte Inliner aus Kunststoff-Folie mit vormontiertem Befüllungs- und Entnahmestutzen sind als separat vorgefertigtes flach gefaltetes Paket im Anlieferungszustand in Form einer Moduleinheit bereitgestellt und die in den Gitterrahmen einzuhängende äußere Gewebehülle und der innenseitige Inliner sind innerhalb ihres bestimmungsgemäßen Gebrauchs nicht voneinander trennbar sondern nur als komplette Moduleinheit austauschbar ausgebildet.

Im Anlieferungszustand weist die Moduleinheit aus äußerer Gewebehülle und flüssigkeitsdichtem Inliner aus Kunststoff- und/oder Metallfolie mit montierter Befüllungs- und Entnahmearmatur (im Folgenden z. T. auch kurz als "Entnahmearmatur" bezeichnet) als flach gefaltetes Paket eine Faltfläche mit Abmessungen von etwas kleiner als das Innenmaß innerhalb des Gitterrahmens auf.

Dabei ist der flüssigkeitsdichte Inliner für sich flach gefaltet, und zwar so, dass er sich bei Befüllung gleichmäßig nach außen entfaltet und die Befüllung nicht behindert oder verzögert. Die Faltung gestaltet sich wie folgt:
Der Inliner weist flach ausgelegt einen rechteckförmigen Zuschnitt mit einer
Oberseite und einer Unterseite mit zwei längeren Seitenkanten und zwei kurzen Seitenkanten zur Vorderseite und zur Rückseite auf. Die Seitenkanten sind an ihren Außenrändern bzw. Außenkanten miteinander verschweißt
Der Inliner ist mittig auf seiner Oberseite mit einem kleinen, kurzen Entgasungsstutzen und auf seiner Unterseite mit einem größeren Befüllungs- und Entnahmestutzen (im Folgenden auch z. T. kurz als "Entnahmestutzen" bezeichnet) versehen, der nahe zum vorderseitigen kurzen Seitenrand des Inliners angeordnet ist. In einem ersten Schritt sind die Ecken des Inliners jeweils zur Mitte zu dem dort angeordneten kleinen Entgasungsstutzen hin gefaltet, so dass ein quer zu den langen Seitenkanten verlaufender schmaler Steg verbleibt. In einem zweiten Schritt sind die beiden Außenkanten des schmalen Steges um ein kurzes Stück zur Mitte hin in Richtung mittigem Entgasungsstutzen gefaltet, so dass sich eine etwa rautenförmige Form mit einer vorderseitigen und einer rückseitigen Spitze ergibt, wobei der Befüllungs- und Entnahmestutzen auf der Unterseite der vorderseitigen Rautenspitze sitzt. In einem weiteren Schritt sind die beiden soeben eingeklappten Seitenränder des schmalen Steges noch einmal um ein weiteres kurzes Stück zur Mitte hin eingeklappt, und im letzten Schritt der Inliner-Faltung sind die vorderseitige und die rückseitige Rautenspitze ebenfalls zur Mitte hin bis dicht an den mittigen Entgasungsstutzen eingefaltet, so dass nun die Grundfläche des fertig zusammengefalteten Inliners eine endgültige Faltfläche mit Abmessungen von etwas kleiner als das Innenmaß innerhalb des Gitterrahmens aufweist, wobei der Befüllungs- und Entnahmestutzen auf die Oberseite des Inliners gefaltet ist und dicht am vorderseitigen Rand des zusammengefalteten Inliners sitzt. Anschließend wird der zusammen gefaltete Inliner auf eine dünne Bodenplatte gelegt und auf dieser fixiert.

Bei der Moduleinheit ist die Gewebehülle für sich nur in ihren Seitenwandungen eingefaltet, wobei der innenliegende fertig gefaltete Inliner mitsamt der montierten Entnahmearmatur innerhalb der Gewebehülle frei von jeglicher Fixierung oder Befestigung an der Gewebehülle ist.

Konstruktiv weist die Moduleinheit eine Besonderheit dahingehend auf, dass innerhalb der Gewebehülle unterhalb des Inliners eine dünne steife Bodenplatte angeordnet ist, auf welcher der Inliner fixiert ist, wobei die Bodenplatte nicht an der Gewebehülle befestigt ist.

In Ausgestaltung der Erfindung ist die dünne Bodenplatte vorderseitig über das Innenmaß innerhalb des Gitterrahmens verlängert ausgebildet und diese Verlängerung ist über ein knickfalzartiges Filmscharnier mit der Bodenplatte verbunden. Dabei ist weiterhin mittig in der Verlängerung eine Öffnung vorgesehen, durch die der Befüllungs- und Entnahmestutzen des Inliners mit außen aufgesetzter Befüllungs- und Entnahmearmatur hindurch gesteckt und von außen befestigt ist.

Im flach eingefalteten Anlieferungszustand der Moduleinheit ist die Verlängerung mit aufgesetzter Befüllungs- und Entnahmearmatur flach auf den eingefalteten Inliner zurückgelegt bzw. zurückgefaltet.

Die angelieferte zusammengefaltete Moduleinheit kann nun bei jedem Rekonditionierer von jedem nicht besonders dazu geschulten Mitarbeiter in einen Palettenkäfig eingesetzt werden. Dazu wird die äußere Gewebehülle zunächst einfach mit vier Befestigungsschlaufen in den Ecken des Gitterrahmens aufgehängt; danach wird die senkrecht geklappte Verlängerung mit Entnahmearmatur hochgeklappt und an den Metallstäben des Gitterrahmens befestigt.

Im eingesetzten Zustand der Moduleinheit ist die äußere Gewebehülle im Gitterrahmen aufgespannt und fixiert, wobei die Verlängerung der Bodenplatte um 90 Grad in die Senkrechte hochgeklappt und mittels einer hinter die Entnahmearmatur greifenden Adapterplatte an der Vorderseite des Gitterrahmens befestigt ist. Der eingefaltete Inliner entfaltet sich dann später bei der Befüllung von selbst.

Damit ist der gebrauchte Palettencontainer wieder mit einer neuen Gewebehülle und einem aseptischen Inliner ausgestattet und kann an die Kunden bzw. Abfüller versandt werden. Bei den Kunden können diese Palettencontainer mit flexiblen Hüllen genau an den gleichen Abfüllanlagen abgefüllt werden, wie sie für die bisher verwendeten Edelstahl-IBCs vorgesehen sind.

Bei Befüllung solcher Edelstahl-BCs wird das Füllgut regelmäßig unter hohem Druck über ein an die bodenseitige Einfüllarmatur angeschlossenes Befüllrohr eingeströmt. Dadurch, dass der Inliner des erfindungsgemäßen Palettencontainers flächig auf der dünnen Bodenplatte fixiert ist, wird gewährleistet, dass sich bei einer Befüllung des Inliners, die mit hohem Druck erfolgt, keine Falten in der Bodenfläche des Inliners bilden können, die sich später bei einer Entnahme mit starkem Absaugen des Füllguts vor die bodenseitige Entnahmeöffnung legen und diese versperren können.

Zudem ist der erfindungsgemäße Palettencontainer mit einer Restentleerungshilfe ausgestattet, die verhindert, dass bei Entleerung Falten des beim Entleerungsprozess sukzessive zusammenfallenden Inliners die Öffnung des Befüllungs- und Entnahmestutzens versperren.

Die Erfindung wird nachfolgend anhand von in den Zeichnungen schematisch dargestellten Ausführungsbeispielen näher erläutert und beschrieben. Es zeigen:
- Figur 1: in Gesamtansicht einen erfindungsgemäßen Palettencontainer mit eingehängter Gewebehülle und austauschbarem Inliner,
- Figur 2: einen erfindungsemäßen Palettencontainer mit eingehängter Gewebehülle und Aufschnittdarstellung des dünnwandigen Inliners,
- Figur 3: in Teilansicht die Anbindung der Adapterplatte mit der Entnahmearmatur am Gitterrahmen des Palettencontainers
- Figur 4: in Draufsicht die Oberseite des erfindungsgemäßen Palettencontainers
- Figur 5: die Schrittfolge der erfindungsgemäße Einfaltung des dünnwandigen Inliners
- Figur 6: in perspektivischer Darstellung eine rohrförmige Restentleerungshilfe
- Figur 7: in Seitenansicht die Restentleerungshilfe gemäß Figur 6.

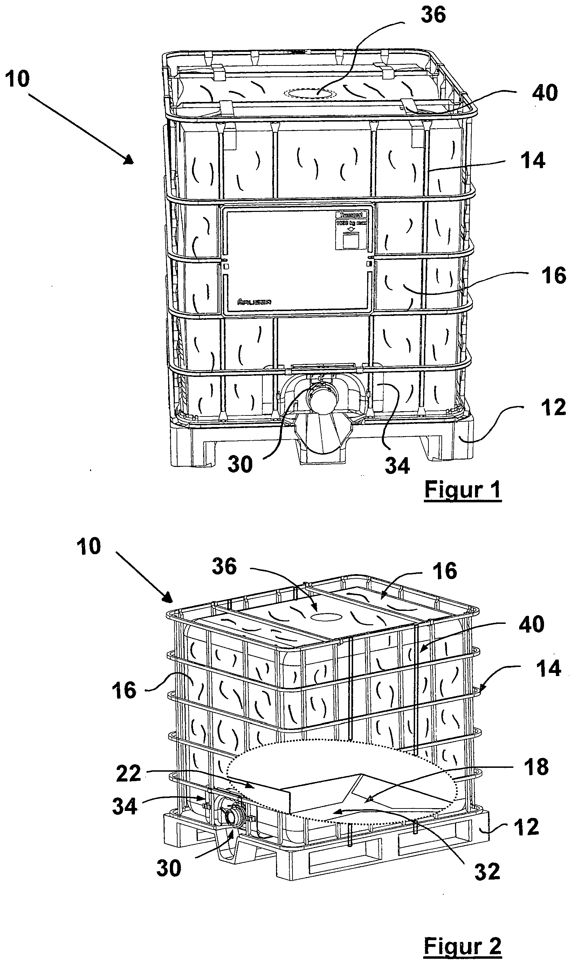

In Figur 1 ist ein erfindungsgemäßer Palettencontainer 10 mit Bodenpalette 12, Gitterrahmen 14 und eingehängter Gewebehülle 16 mit innenseitigem Inliner 17 dargestellt.

In Figur 2 ist der konstruktive Aufbau des erfindungsgemäßen Palettencontainers 10 dargestellt. Der erfindungsgemäße Palettencontainer 10 ist folgendermaßen gestaltet:
Der Gitterrahmen 14 mit seiner fest verbundenen Bodenpalette 12 dient der Lade- und Transporthandhabung. Er kann von Flurförderfahrzeugen gehoben und transportiert werden und hat sich bereits als Standard IBC mit PE-Blase bewährt. Die Gewebehülle 16 mit innenliegendem Inliner 17 wird als auswechselbare Moduleinheit definiert. Die Moduleinheit erfüllt zwei Aufgaben. Zum einen werden mit der Festigkeit und Elastizität der äußeren Gewebehülle 16 die auftretenden statischen und dynamischen Kräfte aufgenommen und zum anderen dient der innenseitige Inliner 17 für die Gas- und Flüssigkeitsdichtigkeit des gesamten Gebindes. Die Gewebehülle 16 wird durch die vier Gurte 40 in dem Gitterrahmen 14 aufgespannt. Im ungefüllten Zustand liegt der Inliner 17 auf dem Boden der Gewebehülle 16 und hat in diesem Zustand kein Füllvolumen. Der Inliner 17 besitzt eine spezielle Faltung und ist auf einer Bodenplatte 20 fixiert. Diese befindet sich unter dem Inliner 17 und im Ventilbereich auch vor dem Inliner 17. Die Bodenplatte 20 ist nicht in der Gewebehülle 16 fixiert. Sie wird lediglich über die Grundfläche und die Adapterplatte 34 positioniert. Die Funktion der Bodenplatte 20 schließt auch den Schutz des Inliners 17 gegen Durchdringung spitzer Gegenstände von unten und die horizontale Abstützung bei großen Füllgeschwindigkeiten ein. Der Zugang zu dem Innenvolumen des Inliners 17 erfolgt über die Befüll- und Entnahmearmatur 30, wobei das Volumen des Inliners 17 in ungefülltem Zustand null und in gefülltem Zustand dem des Füllguts entspricht. Begrenzt wird das Volumen des Inliners 17 durch das der Gewebehülle 16. Auf der Oberseite des Inliners 17 ist ein Entgasungsstutzen 32 angebracht. Soll das Füllgut durch ein Gas vor der Entnahme aufgerührt werden, so muss die Gasmenge, die das Volumen der Gewebehülle 16 überschreitet, über den Entgasungsstutzen 32 abgelassen werden. Dazu wird als irreversibler Zugang 38 das Sichtfenster 36 geöffnet bzw. aufgeschnitten und ein Sterilfilter auf den Entgasungsstutzen 32 aufgeschraubt. Der Befüll- und Entnahmestutzen 28 wird durch die Adapterplatte 34 an dem Gitterrahmen 14 fixiert. Die Adapterplatte 34 sorgt mit einer rückspringenden Mulde für den nötigen Abstand des Befüll- und Entnahmestutzens 28. Dieser darf nicht über die Projektionsfläche des Gitterrahmens 14 überstehen. Die Adapterplatte 34 ermöglicht einen leichten Anschluss der Befüll- und Entnahmearmatur 30 an Füll- und Entleerungsanlagen. Marktübliche Füllkanonen können durch ihre Geometrie direkt an die Befüll- und Entnahmearmatur 30 angeschlossen werden. Der Inliner 17 stellt sich während der Befüllung von alleine auf. Eine Manipulation von außen durch den Abfüller ist weder erforderlich, noch gewünscht, noch durch die geschlossene Gewebehülle 16 möglich.

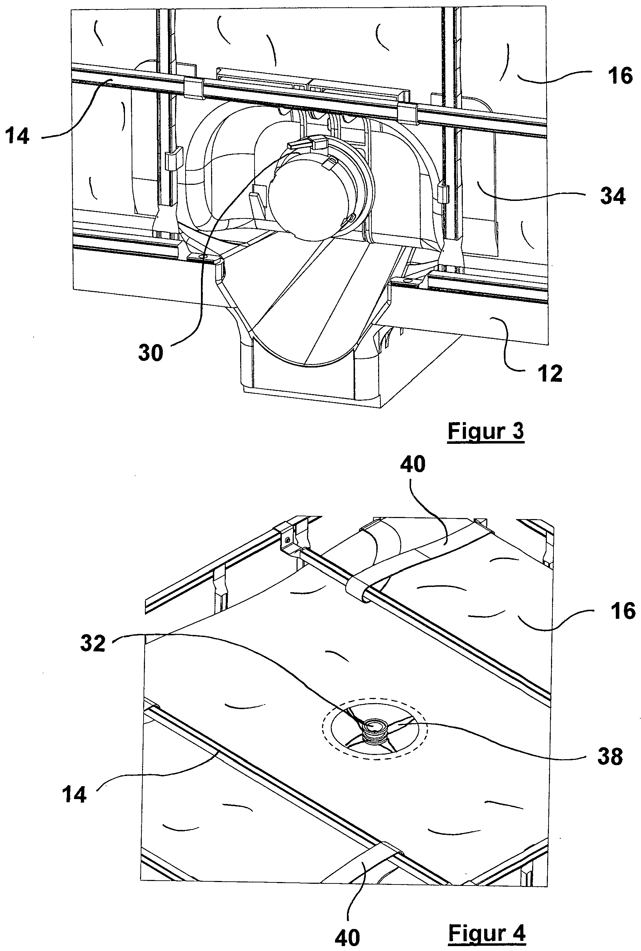

Die Teilansicht des Palettencontainers mit Gitterrahmen 14, Bodenpalette 12 und eingehängter Gewebehülle 16 in Figur 3 zeigt die Befüll- und Entnahmearmatur 30 mit Adapterplatte 34. Die Adapterplatte 34 hat eine Mulde nach innen und sorgt damit für die nötige Positionierung des Befüll- und Entnahmestutzens 28 mit aufgesetzter Befüll- und Entnahmearmatur 30, damit diese nicht über die Projektionsfläche des Gitterrahmens 14 nach außen vorsteht.

Figur 4 zeigt die Oberseite des erfindungsgemäßen Palettencontainers 10. In die Gewebehülle 16 ist eine Klarsichtscheibe fest als geschlossenes Sichtfenster 36 eingearbeitet. Sie dient der Sichtkontrolle des Füllstands. Figur 4 zeigt dieses Sichtfenster 36 mit eingebrachtem Entgasungsstutzen 32. Ein solcher wird benötigt, wenn das Füllgut vor Entnahme durch ein Gas aufgerührt werden soll. Das Einbringen einer Öffnung für den Zugang zum Entgasungsstutzen 32 ist irreversibel, da das Sichtfenster 36 nicht wiederverschließbar ausgestaltet ist, sondern zum Einbringen der Öffnung für den Zugang zum Entgasungsstutzen 32 durchstoßen oder aufgeschnitten werden muss.

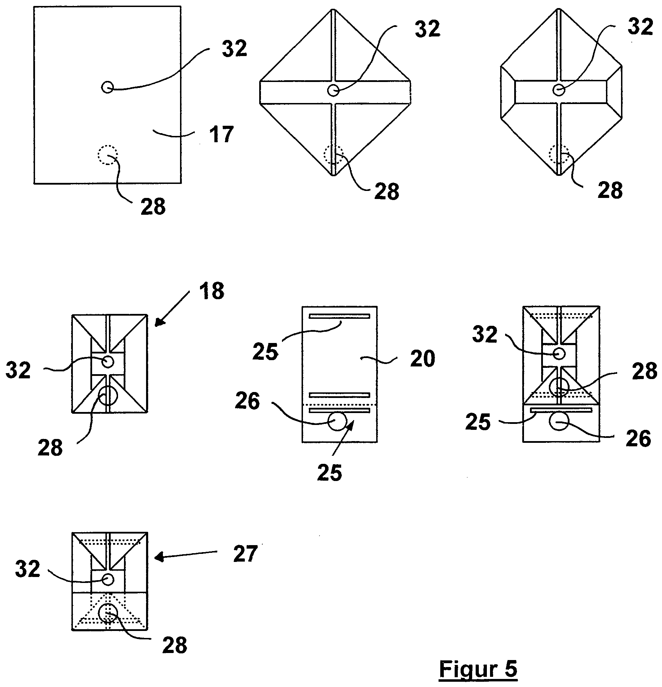

In Figur 5 sind die einzelnen Schritte zum Falten des erfindungsgemäßen Inliners 17 dargestellt.

Der Inliner 17 weist flach ausgelegt einen rechteckförmigen Zuschnitt mit einer Oberseite und einer Unterseite mit zwei längeren Seitenkanten und zwei kürzen Seitenkanten zur Vorderseite und zur Rückseite auf, die an ihren Außenrändern bzw. Außenkanten miteinander verschweißt sind. Mittig auf seiner Oberseite ist der Inliner 17 mit einem kleinen, kurzen Entgasungsstutzen 32 und auf seiner Unterseite mit einem größeren Befüll- und Entnahmestutzen 28 versehen, der nahe zum vorderseitigen kurzen Seitenrand des Inliners 17 angeordnet ist.

Solange der Palettencontainer 10 noch nicht befüllt ist, d. h. sich noch im Leerzustand befindet, liegt der Inliner 17 in einer besonderen Faltung flach eingefaltet in der im Gitterrahmen 14 des Palettencontainers 10 aufgehängten Gewebehülle 16, direkt auf dem Oberdeck der Bodenpalette 12. Dabei ist der Inliner 17 nur über den Entnahmestutzen 20 mittels einer Adapterplatte 34 am Gitterrahmen 14 des Palettencontainers 10 befestigt. Der Inliner 17 wird nur durch die auf den Entnahmestutzen 20 aufgesetzte Befüll- und Entnahmearmatur 30 beim Abfüller befüllt und - nach einem Transport zu einem Kunden - dort wieder durch die Entnahmearmatur 22 entleert.

Für eine selbsttätige Entfaltung des Inliners 17 bei der Befüllung des Palettencontainers 10 ist der Inliner 17 besonders gefaltet und konstruktiv aufgebaut:
Bei dem flach ausgelegten Inliner 17 werden - gemäß Figur 5 - im ersten Schritt die Ecken des Inliners 17 jeweils zur Mitte zu des dort angeordneten kleinen, kurzen Entgasungsstutzen 32 hin gefaltet, so dass ein quer zu den langen Seitenkanten verlaufender schmaler Steg verbleibt. Im zweiten Schritt werden die beiden Außenkanten des schmalen Steges um ein kurzes Stück zur Mitte hin in Richtung mittigem Entgasungsstutzen 32 gefaltet, so dass sich eine etwa rautenförmige Form mit einer vorderseitigen und einer rückseitigen Spitze ergibt. Dabei sitzt nun der Entnahmestutzen 20 auf der Unterseite der vorderseitigen Rautenspitze. Danach werden die beiden soeben eingeklappten Seitenränder des schmalen Steges noch einmal um ein weiteres kurzes Stück zur Mitte hin eingeklappt. Im letzten Schritt der Inliner-Faltung werden die vorderseitige und die rückseitige Rautenspitze ebenfalls zur Mitte hin bis dicht an den mittigen Entgasungsstutzen 32 eingefaltet, so dass nun die Grundfläche des fertig zusammengefalteten Inliners 17 eine endgültige Faltfläche mit Abmessungen von etwas kleiner als das Innenmaß innerhalb des Gitterrahmens 14 aufweist. Dabei ist nun der Entnahmestutzen 20 auf die Oberseite des Inliners 17 gefaltet worden und sitzt dicht am vorderseitigen Rand des zusammengefalteten Inliners 17.

Im folgenden Schritt wird der zusammengefaltete Inliner 17 auf eine dünne Bodenplatte 20 gelegt und auf dieser fixiert. Die dünne Bodenplatte 20 kann z. B. aus dünnem Blech, aus Pappe, aus Holz, einer Hartfaserplatte oder vorzugsweise aus Kunststoff bestehen. Die Fixierung des Inliners 17 auf der Bodenplatte 20 kann durch flächig aufgetragenen Klebstoff oder vorzugsweise einfach mittels doppelseitigem Klebeband 25 realisiert werden.

Zu einer wesentlichen Stabilitätserhöhung bzw. Stabilisierung des Inliners 17 - der nicht mit der äußeren Gewebehülle 16 verbunden (fixiert) ist- innerhalb des Gitterrahmens 14 ist die dünne Bodenplatte 20 vorderseitig über das Innenmaß innerhalb des Gitterrahmens 14 verlängert ausgebildet, wobei diese Verlängerung 22 über ein knickfalzartiges Filmscharnier 24 mit der Bodenplatte 20 verbunden ist. Mittig in der Verlängerung 22 ist eine Öffnung 26 eingebracht, durch die der Entnahmestutzen 20 des Inliners 17 außen hindurch gesteckt ist. Im flach eingefalteten Anlieferungszustand der Moduleinheit, bestehend aus Gewebehülle 16 und eingesetztem Inliner 17, ist die Verlängerung 22 mit aufgesetzter Entnahmearmatur 22 flach auf den eingefalteten Inliner 17 zurückgelegt bzw. zurückgefaltet.

Im eingesetzten Zustand der Moduleinheit ist die äußere Gewebehülle 16 im Gitterrahmen 14 aufgespannt und fixiert, wobei die Verlängerung 22 der Bodenplatte 20 um 90 Grad in die Senkrechte hochgeklappt und mittels einer hinter die Entnahmearmatur 22 greifende Adapterplatte 34 an der Vorderseite des Gitterrahmens 14 befestigt ist.

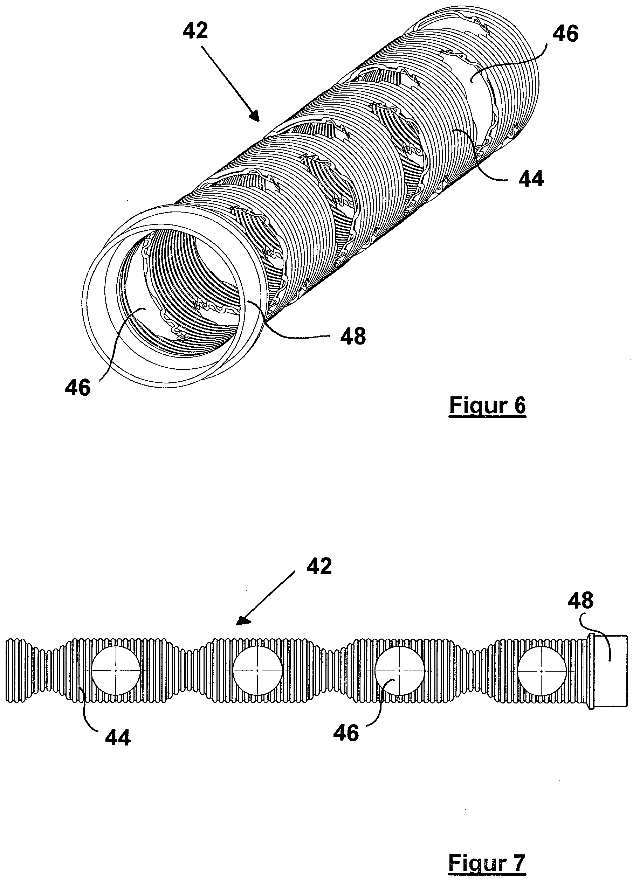

Figur 6 zeigt eine rohrförmige Restentleerungshilfe in perspektivischer Darstellung und Figur 7 die Seitenansicht der Restentleerungshilfe.

Für ein optimales Funktionieren des erfindungsgemäßen Palettencontainers 10 mit eingesetzter Moduleinheit beim Befüllen und Entfalten des Inliners 17 in der Abfüllanlage bei einem Abfüller sowie beim Absaugen des flüssigen Füllguts beim Kunden (= Entleerer) ist der Inliner (17) innenseitig vor der Öffnung des bodenseitigen Entnahmestutzens (28) mit einem besonderen Mittel zur verbesserten Restentleerung des Füllguts ausgestattet. Dieses Mittel zur verbesserten Restentleerung des Füllguts besteht aus einer kurzen rohrförmigen Restentleerungshilfe 42, die als flexibles, aus dünnem Kunststoffmaterial bestehendes Wellrohr 44 mit einer Vielzahl von seitlichen Bohrungen 46 ausgebildet ist, wie in Figur 7 dargestellt ist. Das dünnwandige Wellrohr 44 hat eine Wandstärke von ca. 1 mm, eine Länge von etwa 300 bis 500 mm, vorzugsweise ca. 400 mm, und einen Durchmesser von ca. 35 - 57 mm, passend für einen 2 Zoll Stutzen. Es wird durch den Befüll- und Entnahmestutzen 28 in den Inliner 17 eingesetzt und mit der Befüll- und Entnahmearmatur 30 auf dem Befüll- und Entnahmestutzen 28 des Inliners 17 festgeschraubt.

Wie in Figur 6 deutlich wird, sind die seitlichen Bohrungen 46 aus vier Richtungen in das Wellrohr 44 eingebracht, so dass sich immer eine Reihe von Bohrungen 46 dicht oberhalb des Inlinerbodens befinden. Dadurch ist sichergestellt, dass auch geringste Mengen an Restflüssigkeit noch aus dem Inliner 17 herausgesaugt werden können, ohne dass die Gefahr besteht, dass sich durch den starken Absaug-Unterdruck die Folie des Inliners 17 vor die Öffnung des Entnahmestutzens ziehen könnte.

### Bezugsziffernliste

- 10 -: Palettencontainer
- 12 -: Bodenpalette
- 14 -: Gitterrahmen
- 16 -: Gewebehülle
- 17 -: Inliner
- 18 -: Inliner mit Spezialfaltung
- 20 -: Bodenplatte
- 22 -: Verlängerung der Bodenplatte (20)
- 24 -: Filmscharnier
- 25 -: doppelseitiges Klebeband
- 26 -: Öffnung in (22)
- 27 -: Inliner gefaltet und auf Bodenplatte (20) fixiert
- 28 -: Befüll- und Entnahmestutzen
- 30 -: Befüll- und Entnahmearmatur
- 32 -: Entgasungsstutzen
- 34 -: Adapterplatte
- 36 -: geschlossenes Sichtfenster
- 38 -: irreversibler Zugang durch das Sichtfenster
- 40 -: Gurt zum Straffen der Gewebehülle (16)
- 42 -: rohrförmige Restentleerungshilfe
- 44 -: flexibles Wellrohr
- 46 -: seitliche Bohrungen
- 48 -: Flanschrandende

## Patentansprüche

1. Palettencontainer (10) zur Lagerung und zum Transport von aseptischen flüssigen Füllgütern, mit einer Bodenpalette (12),einem darauf befestigten Gitterrahmen (14) aus Metallstäben und einem darin einzuhängenden Gewebesack bzw. einer Gewebehülle (16), in der ein flüssigkeitsdichter Inliner (17) aus Kunststoff- und/oder Metallfolie zur Aufnahme des flüssigen Füllguts angeordnet ist, **dadurch gekennzeichnet, dass** die äußere Gewebehülle (16) und der innenseitige flüssigkeitsdichte Inliner (17) aus Kunststoff- und/oder Metallfolie mit auf einen Befüll- und Entnahmestutzen 28 des Inliners vormontierter Befüll- und Entnahmearmatur (30) als separat vorgefertigtes flach gefaltetes Paket im Anlieferungszustand in Form einer Moduleinheit bereitgestellt ist, die als flach gefaltetes Paket eine Faltfläche mit Abmessungen von etwas kleiner als das Innenmaß innerhalb des Gitterrahmens (14) aufweist, und die in den Gitterrahmen (14) einzuhängende äußere Gewebehülle (16) und der innenseitige Inliner (17) innerhalb ihres bestimmungsgemäßen Gebrauchs nicht voneinander trennbar sondern nur als komplette Moduleinheit austauschbar ausgebildet sind, wobei der Inliner (17) eine besondere Faltung derart aufweist, die folgende Merkmale umfasst:
- Der Inliner (17) weist flach ausgelegt einen rechteckförmigen Zuschnitt mit einer Oberseite und einer Unterseite mit zwei längeren Seitenkanten und zwei kürzen Seitenkanten zur Vorderseite und zur Rückseite auf,
- Der Inliner (17) ist mittig auf seiner Oberseite mit einem kleinen, kurzen Entgasungsstutzen (32) und auf seiner Unterseite mit einem größeren Befüll- und Entnahmestutzen (28) versehen, der nahe zum vorderseitigen kurzen Seitenrand des Inliners angeordnet ist,
- In einem ersten Schritt sind die Ecken des Inliners jeweils zur Mitte zu dem dort angeordneten kleinen, kurzen Entgasungsstutzen (32) hin gefaltet, so dass ein quer zu den langen Seitenkanten verlaufender schmaler Steg verbleibt.
- In einem zweiten Schritt sind die beiden Außenkanten des schmalen Steges um ein kurzes Stück zur Mitte hin in Richtung mittigem Entgasungsstutzen (32) gefaltet, so dass sich eine etwa rautenförmige Form mit einer vorderseitigen und einer rückseitigen Spitze ergibt, wobei der Befüll- und Entnahmestutzen (28) auf der Unterseite der vorderseitigen Rautenspitze sitzt,
- In einem weiteren Schritt sind die beiden soeben eingeklappten Seitenränder des schmalen Steges noch einmal um ein weiteres kurzes Stück zur Mitte hin eingeklappt,
- Im letzten Schritt der Inliner-Faltung sind die vorderseitige und die rückseitige Rautenspitze ebenfalls zur Mitte hin bis dicht an den mittigen Entgasungsstutzen (32) eingefaltet, so dass nun die Grundfläche des fertig zusammengefalteten Inliners (17) eine endgültige Faltfläche mit Abmessungen von etwas kleiner als das Innenmaß innerhalb des Gitterrahmens (14) aufweist, wobei der Befüll- und Entnahmestutzen (28) auf die Oberseite des Inliners (17) gefaltet ist und dicht am vorderseitigen Rand des zusammengefalteten Inliners sitzt,
- Im folgenden Schritt ist der zusammengefaltete Inliner (17) auf eine dünne steife Bodenplatte (20) gelegt und auf dieser fixiert, wobei der flüssigkeitsdichte Inliner (17) für sich flach gefaltet ist und die Gewebehülle (16) mitsamt dem innen liegenden Inliner (17) für sich anders eingefaltet ist, wobei der gefaltete Inliner (17) mitsamt der montierten Befüll- und Entnahmearmatur (30) innerhalb der Gewebehülle (16) frei von jeglicher Fixierung oder Befestigung an der Gewebehülle (16) ist und wobei die dünne steife Bodenplatte (20) innerhalb der Gewebehülle (16) unterhalb des Inliners (17) angeordnet ist.

2. Palettencontainer nach Anspruch 1, **dadurch gekennzeichnet, dass** die dünne Bodenplatte (20) vorderseitig über das Innenmaß innerhalb des Gitterrahmens (14) verlängert ausgebildet ist und diese Verlängerung (22) über ein knickfalzartiges Filmscharnier (24) mit der Bodenplatte (20) verbunden ist.

3. Palettencontainer nach Anspruch 2, **dadurch gekennzeichnet, dass** mittig in der Verlängerung (22) eine Öffnung (26) vorgesehen ist, durch die der Befüll- und Entnahmestutzen (28) des Inliners (17) mit außen aufgesetzter Befüll- und Entnahmearmatur (30) hindurch gesteckt und von außen befestigt ist.

4. Palettencontainer nach einem der vorhergehenden Ansprüche 2 oder 3,
**dadurch gekennzeichnet, dass**
im flach eingefalteten Anlieferungszustand der Moduleinheit, die Verlängerung (22) mit aufgesetzter Befüll- und Entnahmearmatur (30) flach auf den eingefalteten Inliner (17) zurückgelegt bzw. zurückgefaltet ist.

5. Palettencontainer nach einem der vorhergehenden Ansprüche 2 bis 4,
**dadurch gekennzeichnet, dass**
im eingesetzten Zustand der Moduleinheit die äußere Gewebehülle (16) im Gitterrahmen (14) aufgespannt und fixiert ist, wobei die Verlängerung (22) der Bodenplatte (20) um 90 Grad in die Senkrechte hochgeklappt und mittels einer hinter die Befüll- und Entnahmearmatur (30) greifenden Adapterplatte (34) an der Vorderseite des Gitterrahmens (14) befestigt ist.

6. Palettencontainer nach Anspruch 5,
**dadurch gekennzeichnet, dass**
die Fixierung des Inliners (17) auf der Bodenplatte (20) durch flächig aufgetragenen Klebstoff realisiert ist.

7. Palettencontainer nach Anspruch 5,
**dadurch gekennzeichnet, dass**
die Fixierung des Inliners (17) auf der Bodenplatte (20) mittels doppelseitigen Klebebands (25) realisiert ist.

8. Palettencontainer nach einem der vorhergehenden Ansprüche 1 bis 7,
**dadurch gekennzeichnet, dass**
vorzugsweise mittig in die geschlossene Oberfläche der Gewebehülle (16) eine durchsichtige Klarsichtscheibe als Sichtfenster (36) eingearbeitet ist.

9. Palettencontainer nach einem der vorhergehenden Ansprüche 1 bis 8,
**dadurch gekennzeichnet, dass**
vorzugsweise etwa mittig in der geschlossenen Oberfläche des Inliners der verschließbare Entgasungsstutzen (32) fest eingearbeitet ist.

10. Palettencontainer nach einem der vorhergehenden Ansprüche 1 bis 9,
**dadurch gekennzeichnet, dass**
der Inliner (17) innenseitig vor der Öffnung des bodenseitigen Befüll- und Entnahmestutzens (28) mit einem Mittel zur verbesserten Restentleerung des Füllguts ausgestattet ist.

11. Palettencontainer nach Anspruch 10,
**dadurch gekennzeichnet, dass**
das Mittel zur verbesserten Restentleerung des Füllguts ein Rohr (42) ist, das als flexibles, aus dünnem Kunststoffmaterial bestehendes Wellrohr (44) mit einer Vielzahl von seitlichen Bohrungen (46) ausgebildet ist.

12. Palettencontainer nach Anspruch 11,
**dadurch gekennzeichnet, dass**
das Wellrohr (44) ein Flanschrand-Ende (48) aufweist, das im montierten Zustand zur Fixierung innerhalb des Inliners (17) zwischen Befüll- und Entnahmestutzen (28) und aufgeschraubter Armatur (30) eingespannt ist.

13. Verfahren zur besonderen Einfaltung eines Inliners für eine selbsttätige Entfaltung des Inliners innerhalb eines in einem Gitterrahmen eines Palettencontainers einzuhängenden Gewebesackes bzw. einer Gewebehülle bei
der Befüllung des Palettencontainers durch einen bodenseitigen Einfüll- und Entnahmestutzen,
**gekennzeichnet durch** folgende Verfahrensschritte
- der Inliner, der einen rechteckförmigen Zuschnitt mit einer Oberseite und einer Unterseite mit zwei längeren Seitenkanten und zwei kürzen Seitenkanten zur Vorderseite und zur Rückseite aufweist wird flach ausgelegt,
- die Ecken des Inliners werden jeweils zur Mitte zu einem dort angeordneten kleinen, kurzen Entgasungsstutzen hin gefaltet, so dass ein quer zu den langen Seitenkanten verlaufender schmaler Steg verbleibt,
- die beiden Außenkanten des schmalen Steges werden um ein kurzes Stück zur Mitte hin in Richtung mittigem Entgasungsstutzen gefaltet, so dass sich eine etwa rautenförmige Form mit einer vorderseitigen und einer rückseitigen Spitze ergibt, wobei der Entnahmestutzen auf der Unterseite der vorderseitigen Rautenspitze sitzt,
- die beiden soeben eingeklappten Seitenränder des schmalen Steges werden noch einmal um ein weiteres kurzes Stück zur Mitte hin eingeklappt,
- die vorderseitige und die rückseitige Rautenspitze werden ebenfalls zur Mitte hin bis dicht an den mittigen Entgasungsstutzen eingefaltet, so dass nun die Grundfläche des fertig zusammengefalteten Inliners eine endgültige Faltfläche mit Abmessungen von etwas kleiner als das Innenmaß innerhalb des Gitterrahmens des Palettencontainers aufweist, wobei der Entnahmestutzen auf die Oberseite des Inliners gefaltet ist und dicht am vorderseitigen Rand des zusammengefalteten Inliners sitzt,
- der zusammengefaltete Inliner wird auf eine dünne steife Bodenplatte gelegt und auf dieser fixiert.

## Claims

1. Pallet container (10) for storing and for transporting aseptic liquid filling materials, with a base pallet (12), a lattice frame (14) which is fastened thereon and consists of metal bars, and a fabric bag or a fabric cover (16) which is to be suspended in said lattice frame and in which a liquid-tight inliner (17) composed of a plastics film and/or metal foil for receiving the liquid filling material is arranged, **characterized in that** the outer fabric cover (16) and the inner-side liquid-tight inliner (17) composed of plastics film and/or metal foil are provided with a filling and removal fitting (30) preassembled on a filling and removal connection piece (28) of the inliner as a separately premanufactured, flat-folded packet in the delivery state in the form of a modular unit which, as a flat-folded packet, has a folding area with dimensions which are somewhat smaller than the internal size within the lattice frame (14), and the outer fabric cover (16) to be suspended in the lattice frame (14) and the inner-side inliner (17) are designed within the intended use thereof not to be separable from each other, but rather to be exchangeable only as a complete modular unit,
wherein the inliner (17) has a special folding configuration which comprises the following features:
- the inliner (17) has, laid out flat, a rectangular blank with an upper side and a lower side with two longer side edges and two short side edges to the front side and to the rear side,
- the inliner (17) is provided centrally on the upper side thereof with a small, short degassing connection piece (32) and on the lower side thereof with a larger filling and removal connection piece (28) which is arranged close to the front-side, short side border of the inliner,
- in a first step, the corners of the inliner are in each case folded to the center toward the small, short degassing connection piece (32) arranged there, in such a way that a narrow web running transversely with respect to the long side edges remains,
- in a second step, the two outer edges of the narrow web are folded over a short distance toward the center in the direction of the central degassing connection piece (32), thus resulting in an approximately diamond-shaped shape with a front-side and a rear-side point, wherein the filling and removal connection piece (28) sits on the lower side of the front-side diamond point,
- in a further step, the two side borders, just folded in, of the narrow web are folded in once again over a further short distance toward the center,
- in the final step of the inliner folding, the front-side and the rear-side diamond points are likewise folded in toward the center until close to the central degassing connection piece (32), and therefore the basic area of the ready-folded-up inliner (17) now has a final folding area with dimensions which are somewhat smaller than the internal size within the lattice frame (14), wherein the filling and removal connection piece (28) is folded onto the upper side of the inliner (17) and sits tightly against the front-side border of the folded-up inliner,
- in the following step, the folded-up inliner (17) is placed onto a thin, stiff base plate (20) and fixed thereon,
wherein the liquid-tight inliner (17) is folded flat per se, and the fabric cover (16) together with the inliner (17) located on the inside is folded in differently per se, wherein the folded inliner (17) together with the fitted filling and removal fitting (30) is in the fabric cover (16) is free from any fixing or fastening to the fabric cover (16) and wherein the thin, stiff base plate (20) is arranged within the fabric cover (16) below the inliner (17).

2. Pallet container according to Claim 1, **characterized in that** the thin base plate (20) is designed so as to be extended on the front side beyond the internal size within the lattice frame (14), and said extension (22) is connected to the base plate (20) via a film hinge (24) in the manner of a buckling fold.

3. Pallet container according to Claim 2, **characterized in that** an opening (26) is provided centrally in the extension (22), through which the filling and removal connection piece (28) of the inliner (17) with filling and removal fitting (30) attached on the outside is inserted and fastened from the outside.

4. Pallet container according to either of the preceding Claims 2 or 3, **characterized in that**, in the flat-folded-in delivery state of the modular unit, the extension (22) with filling and removal fitting (30) attached is laid back or folded back flat onto the folded-in inliner (17).

5. Pallet container according to one of the preceding Claims 2 to 4, **characterized in that**, in the inserted state of the modular unit, the outer fabric cover (16) is stretched and fixed in the lattice frame (14), wherein the extension (22) of the base plate (20) is folded upward by 90° into the perpendicular and is fastened to the front side of the lattice frame (14) by means of an adapter plate (34) reaching behind the filling and removal fitting (30).

6. Pallet container according to Claim 5, **characterized in that** the fixing of the inliner (17) on the base plate (20) is realized by an adhesive applied in a sheet-like manner.

7. Pallet container according to Claim 5, **characterized in that** the fixing of the inliner (17) on the base plate (20) is realized by means of double-sided adhesive tape (25).

8. Pallet container according to one of the preceding Claims 1 to 7, **characterized in that** a transparent clear viewing pane is incorporated as a viewing window (36), preferably centrally, into the closed surface of the fabric cover (16).

9. Pallet container according to one of the preceding Claims 1 to 8, **characterized in that** the closable degassing connection piece (32) is fixedly incorporated, preferably approximately centrally, in the closed surface of the inliner.

10. Pallet container according to one of the preceding Claims 1 to 9, **characterized in that** the inliner (17) is equipped on the inner side upstream of the opening in the base-side filling and removal connection piece (28) with a means for the improved residue emptying of the filling material.

11. Pallet container according to Claim 10, **characterized in that** the means for the improved residue emptying of the filling material is a pipe (42) which is designed as a flexible corrugated pipe (44) which consists of thin plastics material and has a multiplicity of lateral bores (46).

12. Pallet container according to Claim 11, **characterized in that** the corrugated pipe (44) has a flange border end (48) which, in the fitted state, is clamped between filling and removal connection piece (28) and screwed-on fitting (30) for fixing within the inliner (17).

13. Method for specially folding in an inliner for automatic unfolding of the inliner within a fabric bag or a fabric cover which is to be suspended in a lattice frame of a pallet container during filling of the pallet container through a base-side filling and removal connection piece, **characterized by** the following method steps
- the inliner which has a rectangular blank with an upper side and a lower side with two longer side edges and two short side edges to the front side and to the rear side is laid out flat,
- the corners of the inliner are in each case folded to the center toward a small, short degassing connection piece arranged there, in such a way that a narrow web running transversely with respect to the long side edges remains,
- the two outer edges of the narrow web are folded over a short distance toward the center in the direction of the central degassing connection piece, thus resulting in an approximately diamond-shaped shape with a front-side and a rear-side point, wherein the removal connection piece sits on the lower side of the front-side diamond point,
- the two side borders, which have just been folded in, of the narrow web are folded in once again toward the center over a further short distance,
- the front-side and the rear-side diamond points are likewise folded in toward the center until close to the central degassing connection piece, in such a way that the basic area of the ready-folded-up inliner has a final folding area with dimensions which are somewhat smaller than the internal size within the lattice frame of the pallet container, wherein the removal connection piece is folded onto the upper side of the inliner and sits tightly against the front-side border of the folded-up inliner,
- the folded-up inliner is placed onto a thin, stiff base plate and fixed thereon.

## Revendications

1. Conteneur sur palette (10) pour le stockage et pour le transport de matériaux de remplissage fluides aseptiques, avec une palette de fond (12), un cadre grillagé (14) composé de tiges métalliques fixé dessus et avec un sac en tissu et/ou une enveloppe en tissu (16) à accrocher à l'intérieur dans lequel ou dans laquelle une poche intérieure (17) étanche aux fluides et composée d'un film en plastique et/ou en métal est disposée pour loger le matériau de remplissage fluide, **caractérisé en ce que**
l'enveloppe en tissu (16) extérieure et la poche intérieure (17) étanche aux fluides du côté intérieur et composée d'un film en plastique et/ou en métal étant préparée avec une armature de remplissage et de prélèvement (30) prémontée sur un manchon de remplissage et de prélèvement 28 de la poche intérieure sous la forme d'un paquet plié à plat préfabriqué séparément, dans l'état de livraison, sous la forme d'une unité modulaire, ladite unité réalisée sous la forme d'un paquet plié à plat comportant une surface pliée avec des dimensions quelque peu inférieures à la dimension intérieure à l'intérieur du cadre grillagé (14) et l'enveloppe en tissu (16) extérieure à accrocher dans le cadre grillagé (14) et la poche intérieure (17) du côté intérieur étant réalisées dans le cadre de leur utilisation conforme à leur destination de façon à ne pas pouvoir être séparées l'une de l'autre mais plutôt être uniquement remplacées comme une unité modulaire complète, la poche intérieure (17) présentant un pliage particulier de façon à comprendre les caractéristiques suivantes :
- la poche intérieure (17) présente, lorsqu'elle est mise à plat, une coupe rectangulaire avec un côté supérieur et un côté inférieur avec deux arêtes latérales plus longues et deux arêtes latérales courtes, par rapport au côté avant et par rapport au côté arrière ;
- la poche intérieure (17) est pourvue de façon centrale sur son côté supérieur d'un petit manchon de dégazage (32) court et sur son côté inférieur d'un manchon de remplissage et de prélèvement (28) plus grand disposé plus près du bord latéral court du côté avant de la poche intérieure ;
- lors d'une première étape, les coins de la poche intérieure sont respectivement pliés vers le centre par rapport au petit manchon de dégazage (32) court disposé à cet endroit, de façon à laisser une passerelle étroite s'étendant transversalement aux longues arêtes latérales ;
- lors d'une seconde étape, les deux arêtes extérieures de la passerelle étroite sont pliées un peu vers le centre, en direction du manchon de dégazage (32) central, de façon à obtenir une forme quelque peu en losange avec une pointe située du côté avant et une pointe située du côté arrière, le manchon de remplissage et de prélèvement (28) reposant sur le côté inférieur de la pointe en losange située du côté avant ;
- lors d'une étape supplémentaire, les deux bords latéraux de la passerelle étroite juste rabattus sont encore une fois rabattus un peu plus vers le centre ;
- lors de la dernière étape du pliage de la poche intérieure, les pointes en losange situées du côté avant et du côté arrière sont également pliées vers le centre jusqu'à être repliées de façon étanche contre le manchon de dégazage (32) central, de sorte que maintenant la surface de base de la poche intérieure (17) déjà repliée comporte une surface pliée définitive avec des dimensions quelque peu plus petites que la dimension intérieure à l'intérieur du cadre grillagé (14), le manchon de remplissage et de prélèvement (28) étant plié sur le côté supérieur de la poche intérieure (17) et reposant de façon étanche contre le bord situé du côté avant de la poche intérieure repliée ;
- à l'étape suivante, la poche intérieure (17) repliée est placée sur une fine plaque de fond (20) rigide et fixée sur elle ;
la poche intérieure (17) étanche aux fluides étant pliée à plat individuellement et l'enveloppe en tissu (16) étant rabattue individuellement autrement, conjointement avec la poche intérieure (17) reposant à l'intérieur ;
la poche intérieure (17) pliée conjointement avec l'armature de remplissage et de prélèvement (30) montée à l'intérieur de l'enveloppe en tissu (16) étant exempte de toute fixation à l'enveloppe en tissu (16) ; et
la fine plaque de fond (20) rigide étant disposée à l'intérieur de l'enveloppe en tissu (16) en dessous de la poche intérieure (17).

2. Conteneur sur palette selon la revendication 1, **caractérisé en ce que** la fine plaque de fond (20) est réalisée de façon à être rallongée sur le côté avant au-delà de la dimension intérieure, à l'intérieur du cadre grillagé (14), et ce prolongement (22) étant relié à la plaque de fond (20) via un film-charnière (24) de type pli rainé.

3. Conteneur sur palette selon la revendication 2, **caractérisé en ce qu'**une ouverture (26) est prévue de façon centrale dans le prolongement (22), à travers laquelle le manchon de remplissage et de prélèvement (28) de la poche intérieure (17) est enfiché avec une armature de remplissage et de prélèvement (30) placée à l'intérieur et fixée depuis l'extérieur.

4. Conteneur sur palette selon l'une quelconque des revendications précédentes 2 ou 3, **caractérisé en ce que** dans l'état de livraison replié à plat de l'unité modulaire, le prolongement (22) est ramené et/ou replié à plat sur la poche intérieure (17) rabattue, avec l'armature de remplissage et de prélèvement (30) placée dessus.

5. Conteneur sur palette selon l'une quelconque des revendications précédentes 2 à 4, **caractérisé en ce que** dans l'état d'utilisation de l'unité modulaire, l'enveloppe en tissu (16) extérieure est ouverte et fixée dans le cadre grillagé (14), le prolongement (22) de la plaque de fond (20) étant rabattu vers le haut de 90 degrés par rapport dans la direction verticale et étant fixé au côté avant du cadre grillagé (14) au moyen d'une plaque d'adaptation (34) s'imbriquant derrière l'armature de remplissage et de prélèvement (30).

6. Conteneur sur palette selon la revendication 5, **caractérisé en ce que** la fixation de la poche intérieure (17) est réalisée sur la plaque de fond (20) par application de colle à plat.

7. Conteneur sur palette selon la revendication 5, **caractérisé en ce que** la fixation de la poche intérieure (17) est réalisée sur la plaque de fond (20) à l'aide d'un ruban adhésif (25) double face.

8. Conteneur sur palette selon l'une quelconque des revendications précédentes 1 à 7, **caractérisé en ce qu'**un disque transparent translucide est réalisé sous la forme d'une fenêtre d'observation (36), de préférence de façon centrale dans la surface fermée de l'enveloppe en tissu (16).

9. Conteneur sur palette selon l'une quelconque des revendications précédentes 1 à 8, **caractérisé en ce que** le manchon de dégazage (32) refermable est réalisé de façon fixe, de préférence quelque peu au centre dans la surface fermée de la poche intérieure.

10. Conteneur sur palette selon l'une quelconque des revendications précédentes 1 à 9, **caractérisé en ce que** la poche intérieure (17) est équipée sur le côté intérieur, avant l'ouverture du manchon de remplissage et de prélèvement (28) situé du côté de fond, d'un moyen de vidage amélioré du reste du matériau de remplissage.

11. Conteneur sur palette selon la revendication 10, **caractérisé en ce que** le moyen de vidage amélioré du reste du matériau de remplissage est un tube (42) réalisé sous la forme d'un fin tube annelé (44) flexible composé d'une fine matière plastique, avec une pluralité d'alésages (46) latéraux.

12. Conteneur sur palette selon la revendication 11, **caractérisé en ce que** le tube annelé (44) comporte une extrémité de bordure de flasque (48) serrée à l'état monté pour la fixation à l'intérieur de la poche intérieure (17) entre le manchon de remplissage et de prélèvement (28) et l'armature (30) vissée dessus.

13. Procédé de pliage particulier d'une poche intérieure pour un dépliage indépendant de la poche intérieure à l'intérieur d'un sac en tissu et/ou d'une enveloppe en tissu à accrocher dans un cadre grillagé d'un conteneur sur palette lors du remplissage du conteneur sur palette par le biais d'un manchon de remplissage et de prélèvement situé du côté de fond, **caractérisé par** les étapes suivantes :
- la poche intérieure, qui présente une coupe rectangulaire avec un côté supérieur et un côté inférieur avec deux arêtes latérales plus longues et deux arêtes latérales courtes, par rapport au côté avant et par rapport au côté arrière, est mise à plat;
- les coins de la poche intérieure sont respectivement pliés vers le centre par rapport à un petit manchon de dégazage court disposé à cet endroit, de façon à laisser une passerelle étroite s'étendant transversalement aux longues arêtes latérales ;
- les deux arêtes extérieures de la passerelle étroite sont pliées un peu vers le centre, en direction du manchon de dégazage central, de façon à obtenir une forme quelque peu en losange avec une pointe située du côté avant et une pointe située du côté arrière, le manchon de prélèvement reposant sur le côté inférieur de la pointe en losange située du côté avant ;
- les deux bords latéraux de la passerelle étroite juste rabattus sont encore une fois rabattus un peu plus vers le centre ;
- les pointes en losange situées du côté avant et du côté arrière sont également pliées vers le centre jusqu'à être repliées de façon étanche contre le manchon de dégazage central, de sorte que maintenant la surface de base de la poche intérieure déjà repliée comporte une surface pliée définitive avec des dimensions quelque peu plus petites que la dimension intérieure à l'intérieur du cadre grillagé du conteneur sur palette, le manchon de prélèvement étant plié sur le côté supérieur de la poche intérieure et reposant de façon étanche contre le bord situé du côté avant de la poche intérieure repliée ;
- la poche intérieure repliée est placée sur une fine plaque de fond rigide et fixée sur elle.
